# EUROPEAN PATENT SPECIFICATION

(11) **EP 1 134 437 B1**
(45) Date of publication and mention of the grant of the patent: **05.01.2005**
(21) Application number: 01500067.2
(22) Date of filing: 14.03.2001
(51) Int. Cl.: F16B 23/00, F16B 25/10

(54) **Screw with a threaded head**
Schraube mit einem Gewindeteil am Schraubenkopf
Vis à tête filetée

(30) Priority: 17.03.2000 ES 200000722
(43) Date of publication of application: 19.09.2001
(73) Proprietor: Celo Distribucion, S.A., 08211 Castellar del Valles (ES)
(72) Inventor: Ceravalls Pujol, Ramon, 08017 Barcelona (ES)
(74) Representative: Ponti Sales, Adelaida

(56) References cited:
- DE-A- 4 031 363

## Description

The present invention relates to a screw with a double thread, which is particularly useful for fitting clamps and other similar elements quickly and easily.

### BACKGROUND OF THE INVENTION

In some applications, for example for fitting securing clamps for exposed tubes and cables, double-threaded screws are sometimes used, formed by a shank which has on one side a thread for attachment to a wall or the like, for example in a plastic wall plug, and on the other side a thread for fitting a clamp thereon, for example a metric thread that is complementary to a female thread in the clamp.

The two threads of the screw are separated by a flange or washer which acts as an abutment.

Such screws are not suitable for metallic plates or structures, firstly because they require that a hole be made beforehand in the metal plate in order to screw the thread into it, and secondly because they do not have a coupling for a screw driving machine; their use is therefore limited to non-professional applications.

Some special nails also exist which have on one end a male thread for fitting into a bushing with a female thread, and which can be driven directly into metal, concrete, brick and the like using a powder driving gun, thanks to a thrust washer provided for this function, but both the gun and the nails themselves have a high cost.

Patent DE 40 31 363 describes a drilling screw with a drilling tip an a treaded part that comprises an end for coupling it to a driver machine.

Patent US 4 764 069 (corresponding to the preamble of claim 1) refers to an anchor for masonry veneer walls which includes a screw with a double thread and a drilling tip.

The aim of the present invention is to solve the aforesaid disadvantages by providing a double-threaded screw which is easy to fit, especially in large numbers, with a relatively low cost.

In accordance with this aim, the screw of the present invention has a first thread made on one part of its length for fastening the screw into a piece or a surface, a second thread on the other part of its length, with the two threads separated by a projecting abutment, and means for engagement with a drill or screw driving machine, said first thread ending in a self-drilling tip, and is characterized in that said means for engagement are formed on or in the end of the screw corresponding to the second thread.

When reference is made in this specification to means for engagement to a drill or screw driving machine it is understood that this engagement is for the purpose of permitting the drill or screw driving machine to drive the screw in rotation in order to fit it.

Thanks to the self-drilling tip, the screw can be fitted quickly and easily into a metal sheet or profile with a drill or screw driving machine without any need to make a hole first. In the case of large installations requiring a large number of screws, this advantage significantly reduces the time to be used and labour costs.

A male coupling can be formed on the end of the screw corresponding to the second thread and being of smaller dimension than the diameter of said second thread.

Alternatively, the engagement means comprise an indentation formed in the end of the screw corresponding to the second thread.

Depending on the type of engagement, one tool or another of the drill or screw driving machine will be used.

Preferably, said first thread is a self-tapping thread and said second thread is a metric thread.

Preferably, the projecting abutment separating the two threads is formed by a washer.

In the present specification, by "self-drilling tip" it is meant a tip capable of drilling or perforating the material to which the screw has to be anchored, while by "self-tapping thread" it is meant a type of thread, normally used in screws that have to be anchored to metal sheets, that forms a mating thread in a material that has been previously bored.

### BRIEF DESCRIPTION OF THE DRAWINGS

For better understanding of all that has been outlined some drawings are attached which, schematically and solely by way of non-restrictive example, show a practical case of embodiment.

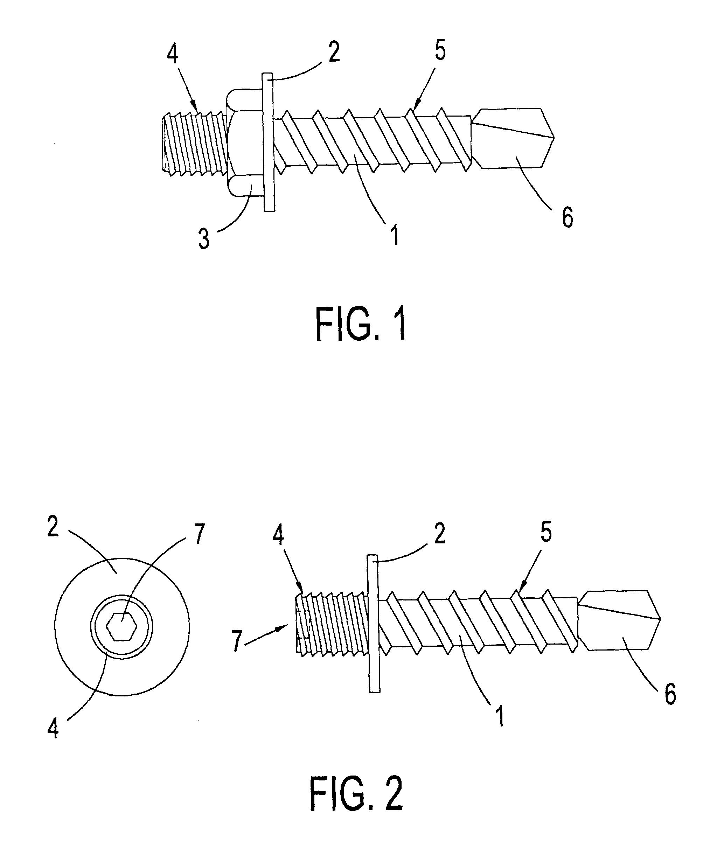

In said drawings, Figure 1 shows a known arrangement, while Figure 2 shows an embodiment of a screw in accordance with the invention.

### DESCRIPTION OF A PREFERRED EMBODIMENT

The double-threaded screw of Figure 1 comprises a shank 1 which has a projecting abutment or washer 2 and an engagement hexagon 3 for coupling a screw-driving drill tool onto it.

The part of the shank 1 which is beside the washer 2 has a first thread 5, in the example a self-tapping thread, that ends in a self-drilling tip 6 intended to be screwed into a metal sheet or profile.

The part of the shank beside the hexagon 3 is provided with a second thread 4, in this case a metric thread.

The screw is fixed in a single operation into a metal sheet using a screw-driving drill, since the tip 6 itself drills the necessary hole, and the plate screw 5 is attached to the metal sheet with two or three turns of thread, or more, depending on the thickness of the sheet.

Once the screw has been fitted, a clamp or similar element is attached to the metric thread 4.

It has been found that this screw is suitable for sheet metal or metal profiles up to 12 mm in thickness. For small thicknesses the self-tapping thread is continuous and of relatively large pitch (as shown in the drawings), while for sheets and profiles closer to 10 mm it is preferable to use a screw with a much smaller pitch and provided with slots and recesses suitable for the exit of swarf.

It should be taken into account that the present invention is defined in claim 1, whereby further features are disclosed in the dependent claims; the attached claims, therefore, may cover any suitable type of thread.

In this case, moreover, the hexagon (or any other type of coupling for engagement of the screw to a drill or screw driving machine) could also serve for the abutment function performed by washer 2, which means that the latter could be removed.

The screw of Figure 2, has a washer 2, a metric thread 4 and a self-tapping thread 5 with a self-drilling tip 6, but in this case the hexagon has been replaced by an indentation 7 (in the figure a hexagon indentation for an Allen key) made in the end of the shank 1 corresponding to the metric thread 4. In this case, the tool of the screw-driving drill to be used will be one suitable for the indentation (Phillips, star, Allen, etc.).

A variant (not shown), would consist in providing a male hexagon or square on the end of the shank 1, instead of the indentation 7.

In this case, in order to permit the clamp or the like to be screwed onto the thread 4, the hexagon or square must be of smaller dimension that the diameter of the metric thread.

Despite the fact that a specific embodiment of this invention has been described and shown, it is obvious that a skilled man would be able to introduce variants and modifications, or replace the details by others that are technically equivalent, if not thereby departing from the scope of protection defined in the attached claims.

For example, although the drawings show a screw with a metric thread and a self-tapping thread, it is obvious that the invention could be applied to screws with other combinations and with other types of threads, such as a Whitworth thread, a thread for sheet metal, for plastics, etc., instead of the metric thread or the self-tapping thread.

It is likewise clear that the engagement means for the screw-driving drill shown in Figures 1 and 2 could be replaced by squares, star-shaped or Allen indentations, or indentations of any other shape suitable for the function to be fulfilled.

## Claims

1. A screw with a double thread, of the type comprising a shank (1) which has a first thread (5) made on one part of its length for fastening the screw into a piece or a surface, a second thread (4) on the other part of its length, with the two threads separated by a projecting abutment and means (3;7) for engagement with a drill or screw driving machine, said first thread (5) ending in a self-drilling tip (6), **characterised in that** said means for engagement are formed on or in the end of the screw corresponding to the second thread (4).

2. A screw as claimed in Claim 1, **characterised in that** said first thread (5) is a self-tapping thread and said second thread (4) is a metric thread.

3. A screw as claimed in Claim 1 or Claim 2, **characterised in that** said engagement means comprise a male coupling of suitable shape formed on the end of the screw corresponding to the second thread (4), said male coupling being of smaller dimension than the diameter of said second thread (4).

4. A screw as claimed in Claim 1 or Claim 2, **characterised in that** said engagement means comprise an indentation (7) made in the end of the screw corresponding to the second thread (4).

5. A screw as claimed in Claim 3 or Claim 4, **characterised in that** the projecting abutment separating the two threads (4,5) is formed by a washer (2).

## Patentansprüche

1. Schraube mit einem Doppelgewinde, wobei die Schraube einen Schaft (1) umfasst, welcher ein erstes Gewinde (5), welches auf einem Abschnitt seiner Länge zum Befestigen der Schraube in einem Werkstück oder einer Oberfläche hergestellt ist, ein zweites Gewinde (4) auf dem anderen Abschnitt seiner Länge, wobei die beiden Gewinde durch eine vorstehende Anlage voneinander getrennt sind, und Mittel (3; 7) für einen Eingriff mit einem Bohrer oder einer Schraubendrehmaschine aufweist, wobei das erste Gewinde (5) in einer selbstbohrenden Spitze (6) endet,
**dadurch gekennzeichnet,**
**dass** die Eingriffsmittel auf oder in dem Ende der Schraube gebildet sind, welches dem zweiten Gewinde (4) entspricht.

2. Schraube nach Anspruch 1, **dadurch gekennzeichnet, dass** das erste Gewinde (5) als selbstschneidendes Gewinde und das zweite Gewinde (4) als Millimetergewinde ausgebildet ist.

3. Schraube nach Anspruch 1 oder 2, **dadurch gekennzeichnet, dass** die Eingriffsmittel eine Verbindung in geeigneter Form aufweisen, welches auf dem Ende der Schraube gebildet ist, welches dem zweiten Gewinde (4) entspricht, wobei die Abmessung der Verbindung kleiner ausgebildet ist als der Durchmesser des zweiten Gewindes (4).

4. Schraube nach Anspruch 1 oder 2, **dadurch gekennzeichnet, dass** die Eingriffsmittel eine Vertiefung (7) aufweisen, welche in dem Ende der Schraube hergestellt ist, welche dem zweiten Gewinde (4) entspricht.

5. Schraube nach Anspruch 3 oder 4, **dadurch gekennzeichnet, dass** die die beiden Gewinde (4, 5) trennende, vorstehende Anlage als Unterlegscheibe (2) ausgebildet ist.

## Revendications

1. Vis à double filet, du type comportant une tige (1) qui a un premier filet (5) réalisé sur une première partie de sa longueur pour fixer la vis dans une pièce ou une surface, un second filet (4) sur l'autre partie de sa longueur, les deux filets étant séparés par une butée faisant saillie, et des moyens (3 ; 7) de coopération en prise avec une machine de perçage ou d'entraînement de vis, ledit premier filet (5) se terminant en une pointe autoperceuse (6), **caractérisée en ce que** lesdits moyens de coopération sont formés sur ou dans l'extrémité de la vis correspondant au second filet (4).

2. Vis selon la revendication 1, **caractérisée en ce que** ledit premier filet (5) est un filet auto-taraudant, et **en ce que** ledit second filet (4) est un filet métrique.

3. Vis selon la revendication 1 ou 2, **caractérisée en ce que** lesdits moyens de coopération comportent un raccord mâle d'une forme adaptée formé sur l'extrémité de la vis correspondant au second filet (4), ledit raccord mâle étant d'une dimension plus petite que le diamètre dudit second filet (4).

4. Vis selon la revendication 1 ou 2, **caractérisée en ce que** lesdits moyens de coopération comportent une empreinte (7) réalisée dans l'extrémité de la vis correspondant au second filet (4).

5. Vis selon la revendication 3 ou 4, **caractérisée en ce que** la butée faisant saillie séparant les deux filets (4, 5) est formée par une rondelle (2).
